# EUROPEAN PATENT SPECIFICATION

(11) **EP 2 341 421 B1**
(45) Date of publication and mention of the grant of the patent: **30.08.2017**
(21) Application number: 10192494.2
(22) Date of filing: 25.11.2010
(51) Int. Cl.: G06F 3/048, H04H 60/04, G06F 3/0488, G06F 3/0484

(54) **Parameter adjustment apparatus and audio mixing console**
Parametereinstellungsvorrichtung und Tonmischkonsole
Appareil de réglage de paramètre et console de mélange audio

(30) Priority: 30.11.2009 JP 2009271892; 08.10.2010 JP 2010228469
(43) Date of publication of application: 06.07.2011
(73) Proprietor: YAMAHA CORPORATION, Hamamatsu-shi Shizuoka 430-8650 (JP)
(72) Inventor: Terada, Kotaro, Hamamatsu-shi Shizuoka 430-8650 (JP); Fujita, Hiroaki, Hamamatsu-shi Shizuoka 430-8650 (JP)
(74) Representative: Ascherl, Andreas

(56) References cited:
- GB-A- 2 330 669
- US-A- 5 559 301

## Description

The present invention relates to a parameter adjustment apparatus and audio mixing console for adjusting a value of a parameter pertaining to audio signal processing.

Heretofore, there have been known audio mixers which perform audio signal processing, such as mixing processing, effect impartment processing and sound volume level control processing, on audio signals of a plurality of channels to output the thus-processed audio signals. In recent years, digital audio mixers (hereinafter referred to as "digital mixers" or "mixers") have been developed, which perform internal signal processing in a digital manner. Such mixers have an operation panel on which a multiplicity of controls, operable by a human operator or user to perform operation pertaining to signal processing on audio signals of a plurality of channels, are arranged on a channel-by-channel basis. Different parameters are allocated, as objects of control, to the individual controls of each of the channels. The user uses the controls of the operation panel to perform operation pertaining to various signal processing, such as mixing processing.

Among the conventionally-known digital mixers are one which includes a touch-panel type display device on the operation panel and in which images of a plurality of knob-type virtual controls (hereinafter referred to as knob images) representative of different parameters are displayed on a screen of the display device. In such a digital mixer, a user can select any one of the knob images by touching the screen (i.e., by performing touch operation on the screen), and the parameter represented by the user-selected knob image is allocated to one of physical controls provided on the operation panel so that the value of the parameter can be adjusted using the physical control (see, for example, Japanese Patent Application Laid-open Publication No. 2006-262080 (hereinafter referred to as "the patent literature")). GB 2 330 669 A and US 5,559,301 disclose adjusting parameters using a pop-up screen being displayed upon selecting a respective parameter.

Generally, with the digital mixers, there have been a design-related demand for "reducing the number of elements, such as controls, displayed on the operation panel to minimize the size of the operation panel and simplify the construction of the operation panel", and another design-related demand for "displaying as many parameters as possible on the operation panel so that values of the displayed parameters can be adjusted as desired" in order to achieve a good operability like that of an analog audio mixer. Thus, in the digital mixer disclosed in the patent literature, not only a plurality of parameters (knob images) are displayed on the display device in order to satisfy the demand for a reduced size and simplified construction of the operation panel, but also as many parameters (knob images) are displayed in a predetermined arrangement on a single screen in order to satisfy the demand for an enhanced operability. Consequently, in the digital mixer disclosed in the patent literature, a multiplicity of the knob images are simultaneously displayed in a closely spaced arrangement on the single screen of the display device.

Further, with the digital mixer disclosed in the patent literature, each of the knob images functions only as a means for displaying a value of a parameter and a switch for selecting a parameter to be allocated to any one of the controls; it has no function for adjusting a value of a parameter. As a consequence, user's operation for adjusting a parameter displayed on the touch-panel type display device would undesirably take considerable time and labor.

Furthermore, even assuming that the digital mixer disclosed in the patent literature is equipped with a function for adjusting a value of a parameter in response to user's touch operation on a particular one of the knob images displayed on the touch-panel type display device, it would be extremely difficult for the user to selectively operate only one particular knob image without touching any other knob images.

In view of the foregoing, it is an object of the present invention to provide an improved parameter adjustment apparatus and audio mixing console which can adjust a value of any one of a plurality of parameters, pertaining to audio signal processing, on the basis of touch operation on a touch-panel type display device capable of recognizing or identifying multipoint contacts thereon, and which allow operation for adjusting a value of a parameter to be performed with a significantly enhanced operability.

In order to accomplish the above-mentioned object, the present invention provides an improved parameter adjustment apparatus according to claim 1.

The present invention also provides an improved audio mixing console according to claim 6.

Even with a screen on which the parameter images are displayed in a closely spaced arrangement, the aforementioned construction of the invention allows the user to adjust only the value of a parameter represented by a particular one of the parameter images, through touch operation on the touch-panel type display device, in a simplified and reliable manner, thereby achieving the superior advantageous benefit that the operability in performing operation for adjusting the value of any desired parameter (parameter value adjusting operation) can be significantly enhanced. Further, the present invention can enhance the operability of the parameter value adjusting operation while sufficiently satisfying any design-related demands for constructing an operation panel in a compact and simplified manner and for displaying as many parameters as possible on the operation panel, and thus, the basic principles of the present invention can achieve particularly advantageous benefits in application to parameter adjustment apparatus and mixing consoles of digital audio mixers which adjust, on a parameter-by-parameter basis, a multiplicity of parameters for use in signal processing on audio signals of a plurality of channels.

The present invention may be constructed and implemented not only as the apparatus invention as discussed above but also as a method invention. Also, the present invention may be arranged and implemented as a software program for execution by a processor such as a computer or DSP, as well as a storage medium storing such a software program. Advantageous embodiments may be configured according to any of the dependent claims.

The following will describe embodiments of the present invention, but it should be appreciated that the present invention is not limited to the described embodiments and various modifications of the invention are possible without departing from the basic principles. The scope of the present invention is therefore to be determined solely by the appended claims.

For better understanding of the object and other features of the present invention, its preferred embodiments will be described hereinbelow in greater detail with reference to the accompanying drawings, in which:
Fig. 1 is a block diagram showing an example general hardware setup of a digital audio mixer that is constructed as an embodiment of an audio mixing console of the present invention;
Fig. 2 is a block diagram explanatory of a signal processing construction of the digital audio mixer shown in Fig. 1;
Fig. 3 is a diagram explanatory of a screen displayed on a touch-panel type display device in the digital audio mixer shown in Fig. 1;
Fig. 4 is a diagram outlining user's touch operation on the screen of the touch-panel type display device;
Fig. 5 is a flow chart explanatory of processing performed by a CPU in response to user's touch operation on the screen;
Fig. 6 is a block diagram showing an example general setup of a mixing system which is constructed as another embodiment of the present invention, and which comprises a digital mixer console and a digital mixer engine;
Fig. 7 is a block diagram showing an example general hardware setup of a mixing system which is constructed as still another embodiment of the present invention, and which comprises a digital mixer and a tablet-type computer;
Fig. 8 is a block diagram showing an example general hardware setup of a mixing system which is constructed as still another embodiment of the present invention, and which comprises a digital mixer console, a digital mixer engine and a tablet-type computer; and
Fig. 9 is a block diagram showing an example general hardware setup of a mixing system which is constructed as still another embodiment of the present invention, and which comprises a digital mixer engine and a tablet-type computer.

With reference to the accompanying drawings, the following describe a digital audio mixer constructed as an embodiment of the present invention, which is provided with a touch-panel type display device capable of recognizing or identifying multipoint contacts thereon.

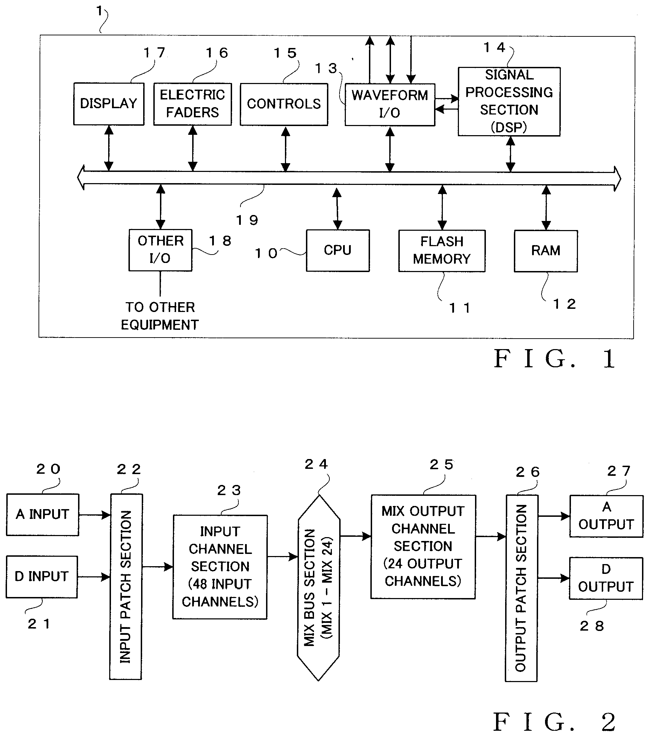

Fig. 1 is a block diagram showing an example general hardware setup of the digital audio mixer (hereinafter referred to as "digital mixer" or more simply as "mixer"). This digital mixer 1 includes a CPU (Central Processing Unit) 10, a flash memory 11, a RAM (Random Access Memory) 12, a waveform input/output interface (waveform I/O) 13, a signal processing section (digital signal processing or DSP section) 14, controls 15, sound-volume-level controlling controls (electric faders) 16, a display device 17 and an other I/O 18, and these components are interconnected via a bus 19.

The CPU 10 executes control programs, stored in the flash memory 11 or RAM 12, to control overall operation of the digital mixer 1. The flash memory 11 is a non-volatile memory having stored therein various control programs for execution by the CPU 10 and various data. The RAM 12 is a volatile memory for use as a loading area for a program to be executed by the CPU 10 and as a working area for the CPU 10. The flash memory 11 includes a current memory having stored therein values of various parameters (current data) pertaining to audio signal processing.

The display device 17, which is provided on an operation panel of the mixer 1, is a touch-panel type display device via which a human operator or user can input desired data through touch operation thereon, i.e. by touching a screen of the display device. In the instant embodiment, the touch-panel type display device is capable of identifying a multiplicity of points. The "touch-panel type display device 17 capable of identifying a multiplicity of points" means that it can individually identify each of touch operation being simultaneously performed on at least two points of the screen. The touch-panel type display device capable of identifying a multiplicity of points (multipoint contacts) may be of any conventionally-known construction as long as it can output, as a detection signal, position information indicative of a position (coordinates) of each touch operation.

Various information based on display control signals given from the CPU 10 via the bus 19 are displayed on the touch-panel type display device 17 in virtual control images, letter (character) strings, etc. The human operator or user performs touch operation on the screen of the display device 17 using some touch or contact means, such as a finger or a pen-type input means called "stylus". The display device 17 supplies a detection signal responsive to the touch operation to the CPU 10 via the bus 19. The CPU 10 performs an operation corresponding to a region of the screen designated by the touch operation.

On the operation panel of the mixer 1 are provided a plurality of controls 15 operable to input various instructions, including adjustment or change of the value of a desired parameter pertaining to audio signal processing, and sound-volume-level controlling controls (electric faders) 16. The "adjustment or change of the value of a desired parameter" means changing the current data of the parameter in response to operation of the user and causing the change of the current data to be reflected in signal processing of the DSP section 14 and display of the display device 17.

The waveform I/O 13, which is an interface for inputting and outputting audio signals, comprises: a plurality of terminals including a plurality of audio terminals that include a plurality of input terminals for inputting analog audio signals, a plurality of output terminals for outputting analog audio signals and digital audio terminals capable of inputting and outputting digital signals of a plurality of channels; and mechanisms for performing analog-to-digital (A/D) conversion, digital-to-analog (D/A) conversion and digital conversion (format conversion). Via the waveform I/O 13, the mixer 1 inputs analog audio signals (indicated by downward arrows in the figure), outputs analog audio signals (indicated by upward arrows in the figure), and inputs and outputs digital audio signals (indicated by bidirectional arrows in the figure). Further, the mixer 1 is connectable with other equipment via the other interface 18. The other interface 18 is a general-purpose interface, such as a USB (Universal Serial Bus) terminal.

The DSP section 14 may comprise either a single DSP (Digital Signal Processor) or a plurality of DSPs interconnected via a bus so that signal processing can be performed distributively by the plurality of DSPs. The DSP section14 performs digital signal processing on a digital audio signal (waveform data) input via the waveform I/O 13 on the basis of current data of various parameters stored in the current memory (flash memory 11), by executing various microprograms on the basis of instructions given by the CPU 10. Then, the DSP section 14 outputs the thus-processed audio signal to the outside via the waveform I/O 13. The digital signal processing performed by the DSP section 14 is various audio signal processing, such as mixing processing, effect impartment processing and sound volume level control processing.

Fig, 2 is a block diagram explanatory of an audio signal processing construction of the mixer 1 of Fig. 1. Processes shown in Fig. 2 are implemented by operation of the waveform I/O 13 and microprogram-based processes performed by the DSP section 14 under control of the CPU 10. An analog input section ("A input") 20 and digital input section ("D input") 21 correspond to an audio signal input function of the waveform I/O 13. The A input 20 represents input of an analog audio signal from a microphone or the like, while the D input 21 represents input of a digital audio signal.

The CPU 10 performs patch setting of an input patch section 22 for allocating an input channel 23, which becomes an output destination of an input signal, to each input source (A input 20 or D input 21). The term "patch" as used herein refers to logically connecting an output destination to an input source of an audio signal. The user can set as desired connections between the input sources (A input 20 and D input 21) and input channels by performing patch setting of the input patch section 22 using user interfaces (controls 15 and display device 21) of the mixer 1.

The input channel section 23 is a logical signal processing channel section implemented by signal processing of the DSP section 14 and comprises a plurality of input channels (forty-eight input channels in the instant embodiment). An audio signal of one input source based on the patch setting by the input patch section 22 is input to each of the input channels of the input channel section 23.

In each of the input channels of the input channel section 23, there are set a multiplicity of parameters that include, for example, a head amp. gain, attenuator, delay, phase switch, equalizer (EQ), compressor, sound volume level, channel ON/OFF, send level to a MIX bus section 24 provided at a succeeding stage and panning. The audio signal input to each of the input channels of the input channel section 23 is subjected to the signal processing based on the current data of various parameters stored in the current memory (flash memory 11) and then output to the MIX bus section 24 provided at the succeeding stage. Note that the parameters to be set in the input channel section 23 are not limited to the aforementioned types.

The audio signal output from each of the input channels of the input channel section 23 is supplied to one or more of twenty-four MIX buses 24. Each of the twenty-four MIX buses 24 mixes together the audio signals supplied from the input channel section 23. The thus-mixed audio signal (mixed result) of each of the MIX buses is output to one output channel corresponding to the MIX bus.

A MIX output channel section 25, which is a logical signal processing channel section implemented by signal processing of the DSP section 14, comprises twenty-four output channels corresponding to the twenty-four MIX buses 24 in one-to-one relation. In each of the MIX buses 25, there are set a multiplicity of parameters that include, for example, an equalizer (EQ), compressor, sound volume level and channel ON/OFF. The audio signal input to each of the MIX output channels 25 are subjected to signal processing based on the current data of various parameters stored in the current memory (flash memory 11) and then output to the output patch section 26.

The CPU 10 performs patch setting for an output patch section 26 to allocate an output port (A output 27 or D output 28), which becomes an output destination, to each of output channels of the output channel section 25. The user can set as desired connections between the MIX output channels 25 and the output ports (A output 27 or D output 28) by performing patch setting of the output patch section 26 using the user interfaces (controls 15 and display device 21) of the mixer 1.

The analog output section (A output) 27 and the digital output section (D output) 28 correspond to an audio signal output function of the waveform I/O 13. The A output 27 represents output of an analog audio signal, while the D output 28 represents output of a digital audio signal. An audio signal of one of the output channels is supplied to each of the A and D outputs 27 and 28 on the basis of the patch setting of the output patch section 26.

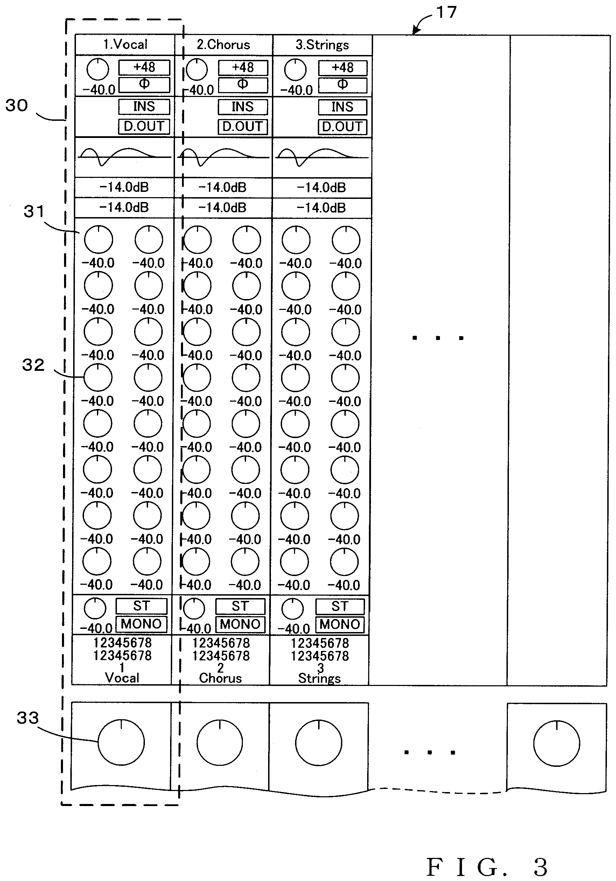

Fig. 3 is a diagram explanatory of a construction of the operation panel of the mixer 1 and structural details of a screen displayed on the touch-panel type display device 17. In Fig. 3, a vertical column depicted by a rectangular frame 30 indicates a channel strip corresponding to a signal processing channel. Each such channel strip 30 includes an area 31 provided on the screen of the display device 17 for displaying parameter settings of the corresponding signal processing channel, and a rotary knob-type physical control (physical knob) 33 provided on the operation panel. The physical knob 33 is included in the controls 15 of Fig. 1.

Further, in the area 31 of each of the channel strips 30 on the display device 17, a plurality of knob-type virtual control images (i.e., knob images) 32 are displayed, each of which is shaped similarly to the corresponding rotary knob-type physical control and is representative of a different parameter, and each of which functions as a switch operable to select the parameter. The plurality of knob images 32 displayed in the channel strip area 31 indicate send levels from the input channel, allocated to the channel strip 30 in question, to a plurality of MIX buses (i.e., each of the knob images 32 indicates a send level from the input channel to one of the MIX buses). In the area 31 of each of the channel strips 30 are displayed, in addition to the above-mentioned knob images 32, many other parameter images representative of parameters pertaining to audio signal processing, such as a virtual push button switch image (button image), a graph showing an EQ characteristic, etc. On the screen of the display device 17, a plurality of the areas 31 for a plurality of channels are displayed in a juxtaposed, side-by-side arrangement. Thus, on the screen of the display device 17, an extremely great number of parameter images, such as the knob images 32, are displayed in a closely spaced arrangement. The "closely spaced arrangement" as used herein is an arrangement or layout in which the plurality of parameter images are placed closely to one another to the extent that it is difficult for the user to perform rotating operation on a particular one of the parameter images (i.e., touch operation for adjusting the value of the parameter) without touching any of the other parameter images. Such a screen configuration where the plurality of parameter images are displayed on a single screen in a juxtaposed, side-by-side arrangement is advantageous in that it can provide the user with an "intuitive operability" like that provided by an analog audio mixer.

The physical knob 33 in each of the channel strips 30 is a control to which is allocatable a parameter to be controlled (i.e., parameter as an object of control). Namely, the user can allocate, as an object of control, a selected one of the plurality of parameters, represented by the physical knobs 33 displayed in the in the channel strip area 31, to the physical knob 33 of the channel strip 30. The user can use the physical knob 33 to adjust the value of the parameter allocated to thereto.

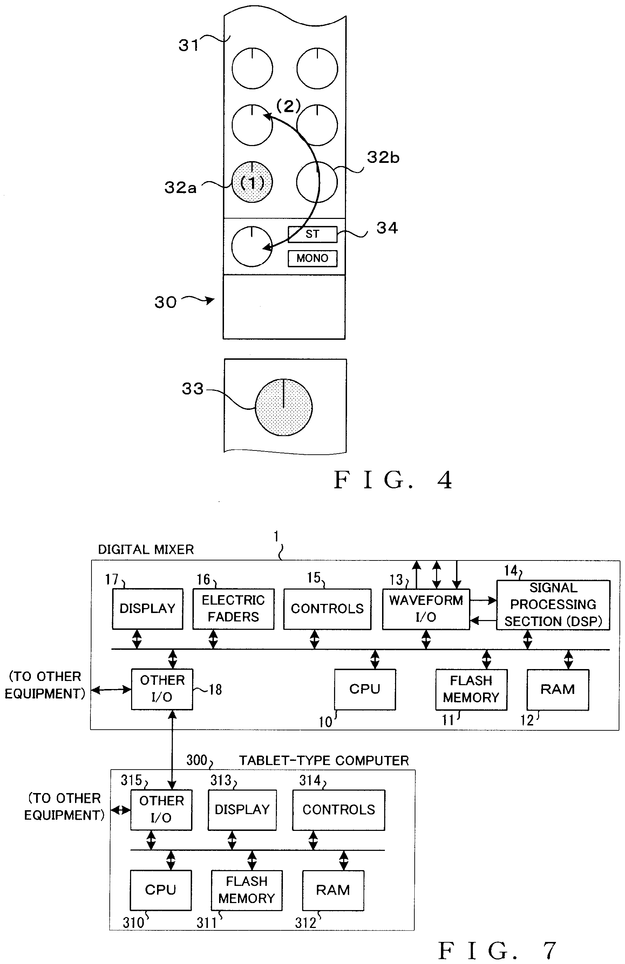

Fig. 4 is a diagram outlining touch operation performed by the user for adjusting the value of a parameter, which more particularly shows a part of one of the channel strips 30 shown in Fig. 3.

In the instant embodiment, the user performs two types of touch operation as set forth below.
(1) On the screen of the touch-panel type display device 17, the user performs first-type touch operation on a desired one of the knob images 32a to select the one knob image 32a. In Fig. 4, "(1)" indicates the knob image 32a being currently selected by the first-type touch operation of the user, and the knob image 32a being currently selected is displayed in a different display style from the other knob images 32a; in the illustrated example, the knob image 32a being currently selected is displayed in a shaded display style. The first-type touch operation is operation in which the user makes a point contact on any one of the knob images 32a that is representative of a desired parameter, in order to select the desired parameter. While no touch operation is being performed on the touch-panel type display device 17, or while at least first-type touch operation is not ongoing or continuing, newly performed touch operation is detected as the "first-type touch operation". A state in which the selection of the knob image 32a is kept effective or valid (i.e., a state in which the parameter represented by the knob image 32a is kept selected) continues as long as the touch operation on the knob image 32a is maintained, i.e. as long as a finger or the like of the user touches the screen of the display device 17.
(2) During the state in which the selection of the knob image 32a (i.e., the parameter represented by the knob image 32a) is kept effective or valid by the first-type touch operation, the user performs "second-type touch operation". The second-type operation is operation in which the user touches the screen of the display device 17 to enter or input a physical amount(s) in order to adjust the value of the currently selected parameter. Namely, touch operation performed by the user while the first-type touch operation is continuing is detected as the "second-type touch operation". The instant embodiment assumes, as such second-type touch operation, operation of moving a contact point on the screen so as to draw a generally arcuate trajectory and thereby input a distance and direction of the contact point as physical amounts (i.e., line contact to virtually perform operation of rotating the corresponding rotary knob control, which will hereinafter be referred to as "movement of second-type touch operation" or "rotating operation" for convenience of description). In Fig. 4, an arc indicated by (2) shows a trajectory of a contact point responsive to "movement of second-type touch operation". The user can input an instruction for changing the value of the currently selected parameter on the basis of the distance and direction of movement of the second-type touch operation.

For example, the user performs first-type touch operation by depressing a desired knob image 32 using its finger while none of the knob images 32, displayed on the display device 17, is depressed by the user. Then, the user performs second-type touch operation by touching another desired portion of the screen with another finger and drawing an arc generally about the finger, having performed the first-type touch operation, while still maintaining the first-type touch operation (i.e., while still depressing the above-mentioned desired knob image 32). Namely, in this case, the user can both select a desired knob image 32 (i.e., perform first-type touch operation) and change or adjust the value of the parameter represented by the selected knob image 32 (i.e., perform second-type touch operation), using its only one hand.

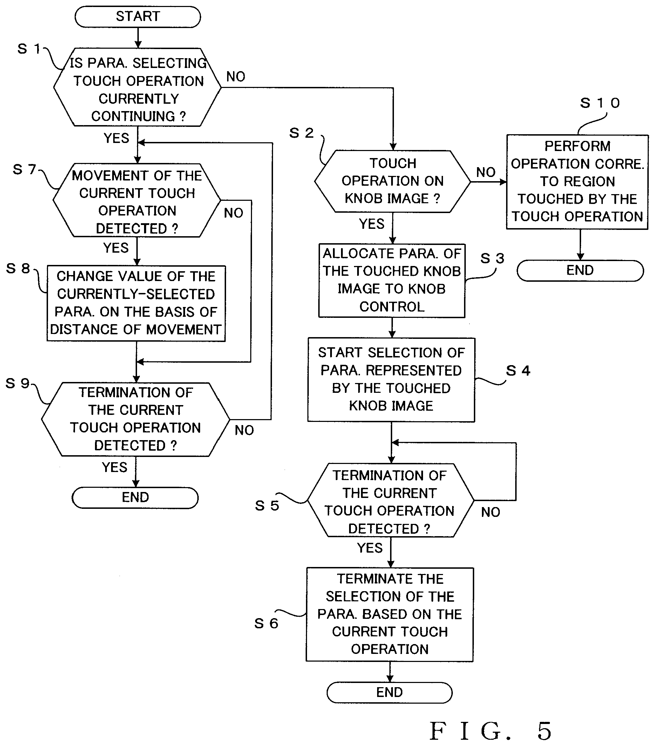

Fig. 5 is a flow chart explanatory of processing performed by the CPU 10 in response to user's touch operation on the screen of the display device 17. This processing is started up or activated in response to detection of new touch operation on the screen of the display device 17 (i.e., in response to the start of new touch operation); this processing is activated in response to any one of the first- and second-type touch operation. In other words, the processing of Fig. 5 is started up or activated in response to any one touch operation. Thus, when a plurality of touch operation has been performed, a plurality of the processing of Fig. 5 corresponding to individual ones of the plurality of touch operation is started up.

At step S1 of the processing, the CPU 10 determines whether first-type touch operation on any one of the knob images 32 is currently ongoing or continuing (i.e., whether the parameter represented by the knob image 32 is currently selected). For example, the CPU 10 may determine that first-type touch operation on any one of the knob images 32 is currently continuing, i.e. that any one of the knob images 32 is currently selected, if any portion of the touch panel is currently touched (any one of the knob images 32 is currently touched by the user), but determine that first-type touch operation on any one of the knob images 32 is not currently continuing if none of the knob images 32 is currently touched by the user. Alternatively, the CPU 10 may determine that first-type touch operation on any one of the knob images 32 is currently continuing if processing of Fig. 5 other than the processing of Fig. 5 having been activated in response to the current touch operation is currently running as processing responsive to the first-type touch operation, but determine that first-type touch operation on any one of the knob images 32 is not currently continuing if no processing of Fig. 5 other than the processing of Fig. 5 having been activated in response to the current touch operation is currently running as processing responsive to the first-type touch operation.

If the current touch operation has been detected with none of the knob images currently selected, i.e. while no first-type touch operation for selecting a parameter is currently continuing (NO determination at step S1), the CPU 10 performs operations at steps S2 to S5. If, on the other hand, any one of the knob images 32 is currently selected, i.e. if new touch operation has been started while first-type touch operation for selecting a parameter is continuing (YES determination at step S1), the CPU 10 identifies the current newly-started touch operation as second-type touch operation (for parameter value adjustment) and performs "operations responsive to second-type touch operation" at steps S7 to S9.

At next step S2, the CPU 10 determines whether the current detected touch operation is operation performed on any one of the knob images 32. Because the display device 17 supplies the CPU 10 with position information indicative of a region of the screen designated by the touch operation, the CPU 10 can determine, on the basis of the supplied position information, whether the region the user has touched by the currently started touch operation is the one knob image 32.

If the currently started touch operation is operation performed on any one of the knob images 32 (YES determination at step S2), the CPU 10 identifies the currently started touch operation as first-type operation and proceeds to step S3, where it allocates the parameter represented by the knob image 32, touched by the first-type touch operation, as an object to be controlled via the physical knob 33 of the channel strip the touched knob image 32 belongs to. If, on the other hand, the currently started touch operation is operation performed on another region than the knob images 32 (NO determination at step S2), the CPU 10 branches to step S10, where it performs an operation corresponding to the region touched by the touch operation and terminates the processing responsive to the current detected touch operation. Note that, in the operations at steps S3 to S5 responsive to the first-type touch operation, the CPU 10 only identifies the touched position (coordinates) and does not identify movement of the touch operation.

At step S4, the CPU 10 starts a parameter selected state in which the selection of the touched knob image 32 touched by the first-type touch operation is kept effective (i.e., the parameter represented by the knob image 32 is kept selected). Note that, with the start of the parameter selected state where the parameter represented by the knob image 32 is kept selected, the CPU 10 may perform control for differentiating the display style (e.g., display color) of the currently selected knob image 32 from that of the other knob images 32.

At step S5, the CPU 10 determines whether termination of the first-type touch operation has been detected. Such a determination at step S5 is looped as long as the first-type touch operation is continuing (i.e., as long as the determination at step S9 is NO). Through the looping of step S5, the parameter selected state (in which the knob image 32 is kept selected) continues until the current first-type touch operation is terminated (e.g., until the user releases its finger from the selected knob image 32). Once termination of the first-type touch operation has been detected (YES determination at step S5), the CPU 10 exits from the looping of step S5 and terminates the parameter selected state (i.e., selection of the knob image 32 and hence the parameter represented by the knob image 32) based on the first-type touch operation at step S6. Then, the CPU 10 terminates the processing responsive to the current first-type touch operation. Note, however, that the parameter allocated to the physical knob 33 at step S3 above is still left set as the object to be controlled via the physical knob 33. Namely, through the operations at steps S1, S2, S4, S5 and S6, the CPU 10 functions as a selection means that stars selection of the parameter represented by the parameter image when the first-type touch operation on the parameter image has been started and terminates the selection of the parameter when termination of the first-type touch operation has been detected.

Once new touch operation on the screen of the display device 17 is detected while first-type touch operation for selecting a parameter is continuing (i.e., while the parameter is kept selected, and the determination operation at step S5 is being looped), the CPU 10 identifies the current newly-detected touch operation as second-type touch operation and starts up the processing of Fig. 5 in relation to the second-type touch operation separately from the processing pertaining to the currently continuing first-type touch operation (i.e., separately from the looping of step S5). Then, in the processing of Fig. 5 started up in relation to the second-type touch operation, the CPU 10 makes a YES determination at step S1 and then proceeds to step S7.

At step S7, the CPU 10 determines whether "movement of the second-type touch operation" has been detected. The CPU 10 can detect presence/absence of the movement of the second-type touch operation by checking variation in the position information, supplied from the display device 17, over a plurality of successive time points, but also detect a distance and direction of the movement of the second-type touch operation on the basis of the variation in the position information over the plurality of successive time points. If such movement of the second-type touch operation has not been detected (NO determination at step S7), the CPU 10 jumps to step S9.

If movement of the second-type touch operation has been detected (YES determination at step S7), the CPU 10 proceeds to step S8, where it changes the value of the currently selected parameter on the basis of the distance and direction of movement input via the second-type touch operation. Thus, the value (current data) of the currently selected parameter stored in the flash memory 11 (current memory) is changed on the basis of the physical amounts (distance and direction of movement) input via the second-type touch operation. Namely, by the operations at step S7 and S8, the CPU 10 functions as a change means for changing the value of the currently selected parameter on the basis of the physical amounts (distance and direction of movement) input via the second-type touch operation.

In the illustrated example of Fig. 4, the user contacts a desired position on the screen and then moves the contact point from the position (movement start point) in such a manner as to draw an arc on the screen along the trajectory "(2)", to thereby input a change amount of the value of the parameter. The CPU 10 determines a change amount of the value of the parameter on the basis of the distance of movement of the second-type touch operation and determines, on the basis of the direction of movement of the second-type touch operation, whether the current value of the parameter should be increased or decreased. Note that, with the change of the value of the parameter, the CPU 10 may perform a display update process for updating the rotational position of a knob portion of the currently selected knob image 32 to another rotational position corresponding to the changed value of the parameter.

Note that the CPU 10 executes steps S7 and S8 only when the parameter represented by one knob image selected by the first-type touch operation is currently selected (YES determination at step S1). Therefore, the CPU 10 can recognize the distance and direction of movement of the second-type touch operation (rotating operation) only as an instruction for changing the value of the currently selected parameter.

At step S9, the CPU 10 determines whether or not the second-type touch operation has been terminated. If the second-type touch operation is currently continuing (NO determination at step S9), the CPU 10 performs the operations of steps S7 to S9 in a looped fashion, during which it changes the value of the currently selected parameter on the basis of the distance and direction of movement input via the second-type touch operation (step S8) each time input of a distance and direction of movement via the second-type touch operation is detected (YES determination at step S7). Once termination of the second-type touch operation the second-type touch operation, of is detected (YES determination at step S9), the CPU 10 exists from the looping of steps S7 to S9 and terminates the processing started in relation to the second-type touch operation. According to the processing of Fig. 5, even when first-type touch operation or second-type touch operation has been detected, the original parameter image display is maintained without an operation being performed for changing the parameter image, displayed on the display device 17, to another image (i.e., newly displaying a special image for changing the value of the parameter in response to the touch operation, such as an enlarged image of the selected knob image 32 or a popup image corresponding to the selected knob image 32). Namely, according to the processing of Fig. 5, the CPU 10 can change the value of the currently selected parameter in response to the detected touch operation while maintaining the original image display (i.e., without changing the image displayed on the display device 17).

According to the "operations responsive to second-type touch operation" at steps S1 and S7 to S9, when new touch operation has been detected while first-type touch operation is continuing, the CPU 10 does not recognize anything other than input of physical amounts (rotating operation) via the second-type touch operation. Stated differently, even when, during continuation of first-type touch operation (i.e., while one knob image 32 is selected), touch operation has been performed on another knob image 32, the CPU 10 does not recognize the touch operation on the other knob image 32 as new first-type touch operation. As a consequence, touch operation on any other knob image than the currently selected knob image 32 can be made invalid. Making touch operation invalid like this is equivalent to causing the CPU 10 to not perform any processing in response to that touch operation. In the instant embodiment, during continuation of first-type touch operation (i.e., while some knob image 32 is selected), the function for selecting any one of the knob images 32 through new touch operation (i.e., parameter selection function) is made invalid on the entire screen of the display device 17.

For example, even when a user's finger has touched a knob image 32b by second-type touch operation performed while a given knob image 32a is selected as indicated by the trajectory "(2)" of Fig. 4, the CPU 10 does not perform the "operations corresponding to first-type touch operation" (steps S1 to S5) for the knob image 32b. Similarly, even when a user's finger has touched a button image "ST" 34 by second-type touch operation, the CPU 10 does not perform any processing corresponding to the touched button image 34.

Namely, during continuation of first-type touch operation, any touch operation other than second-type touch operation pertaining to a currently selected parameter is made invalid. Thus, even with the aforementioned configuration of the screen displayed on the display device 17 with the multiplicity of parameter images in a closely spaced arrangement, the user can reliably adjust only the value of the parameter represented by the currently selected knob image 32, using another knob image 31 displayed on the display device 17, without having to take care to not touch any other parameter images.

According to the above-described embodiment of the present invention, when new touch operation has been detected during continuation of first-type touch operation, the new touch operation is recognized or identified as second-type touch operation pertaining to the currently selected parameter (any other touch operation than such second-type touch operation pertaining to the currently selected parameter is made invalid, and the value of the currently selected parameter is changed on the basis of physical amounts input via the second-type touch operation. Thus, even with the aforementioned configuration of the screen displayed on the display device 17 with the multiplicity of parameter images, such as the knob images 32, displayed in a closely spaced arrangement, the user can reliably adjust only the value (current data) of a parameter represented by a given knob image, using another parameter image displayed on the display device 17 (through touch operation on the screen of the display device 17). As a result, the instant embodiment of the invention achieves the superior advantageous benefit that the operability in performing operation for adjusting the value of a particular parameter can be enhanced. Because the instant embodiment can enhance the operability in performing operation for adjusting the value of a parameter while satisfying both of the design-related demands for constructing the operation panel in a compact and simplified manner and for displaying as many parameters as possible on the operation panel, it can achieve particularly advantageous benefits in application to mixing consoles of digital audio mixers which adjust, on a parameter-by-parameter basis, a multiplicity of parameters for use in signal processing on audio signals of a plurality of channels.

The processing of Fig. 5 has been described above by way of example as detecting termination of currently detected second-type touch operation at step S9 and exiting from the looping of steps S7 to S9 when the second-type touch operation has been terminated. As a modification, a determination may be made at step S9 as to whether termination of so-far continuing first-type touch operation (having selected a parameter) has been detected. In the modification, if the first-type touch operation is continuing (i.e., any one of the knob images 32 is currently selected), a NO determination is made at step S9 to loop the operations of steps S7 to S9, and, when the first-type touch operation has been terminated, the CPU 10 may exit from the looping of the operations of steps S7 to S9. In this case, contact on the screen by currently detected second-type touch operation is made invalid upon termination of the first-type touch operation. Thus, even if the contact on the screen by the second-type touch operation is continuing at the time of the termination of the first-type touch operation, the CPU 10 never performs the processing of Fig. 5 on the basis of the second-type touch operation.

According to the aforementioned modification, if the first-type touch operation is continuing (i.e., any one of the knob images 32 is currently selected), any new second-type touch operation performed during continuation of the first-type touch operation is recognized by the CPU 10 as operation for adjusting the value of the currently selected parameter. Thus, as long as the first-type touch operation is continuing (i.e., any one of the knob images 32 is currently selected by the first-type touch operation), the process for changing the value of the currently selected parameter can be performed no matter how many times second-type touch operation is performed, without newly starting up the processing of Fig. 5 for these second-type touch operation.

The instant embodiment has been described above as being constructed in such a manner that the parameter selection function for selecting a knob image 32 (i.e., selecting the parameter represented by the knob image 32) through first-type touch operation is made invalid on the entire screen of the display device 17 during execution of the "operations responsive to second-type touch operation" at steps S7 to S9. Alternatively, the parameter selection function for selecting a knob image 32 (i.e., selecting the parameter represented by the knob image 32) through touch operation may be made invalid only on a predetermined invalidation region of the screen of the display device 17 during execution of the "operations responsive to second-type touch operation" at steps S7 to S9. In such a case, the determination operation of step S1 identifies, as second-type touch operation, only touch operation on the predetermined invalidation region detected while the knob image 32 is selected. The predetermined invalidation region for which the parameter selection function is made invalid may be a predetermined area around the currently selected knob image 32, an area within the channel strip 30 the currently selected knob image 32 belongs to, or the like.

Further, the image to be selected by the first-type touch operation may be any parameter image other than the knob image 32, such as another form of virtual control image like a button image, a numerical value input box or a graph, as long as it is representative of a parameter.

Furthermore, whereas the first-type touch operation has been described above assuming a point contact on a knob image 32 to be selected, the first-type touch operation may be performed in any desired manner as long as the first-type touch operation can select one parameter image in response to the user touching the screen.

Furthermore, whereas the embodiment has been described above in relation to the case where the parameter to be selected through first-type touch operation (i.e., parameter represented by a knob image 32 touched by first-type touch operation) is a send level, a parameter to be selected through first-type touch operation, and hence a parameter to be controlled through second-type touch operation, may be any other desired type of parameter than the send level. It is preferable that such a parameter to be controlled through second-type touch operation be one adjustable in value over a range comprising two or more numerical values.

Furthermore, the second-type touch operation has been shown and described above with reference to Fig. 4 as being rotating operation along a generally arcuate trajectory about a currently selected knob image 32a. However, as an alternative example of the second-type touch operation for inputting a distance and direction of movement, a contact point of the second-type touch operation may be moved along a generally circular trajectory, i.e. the second-type touch operation may be operation for virtually operating the physical knob to rotate in an endless fashion. Furthermore, the second-type touch operation is not limited to rotating operation and may be operation for moving a contact point of the touch operation in a vertical or up-down direction or in a horizontal or left-right direction on the screen (i.e., operation for inputting a distance and direction of movement along a generally linear trajectory), or operation for inputting a distance and direction of movement along a trajectory comprising a combination of a plurality of lines, or the like. In short, the trajectory of the second-type touch operation may be of any shape as long as it can adjust the value of a desired parameter on the basis of a distance and direction of movement of the second-type touch operation.

Moreover, whereas step S8 of Fig. 5 has been described above as being arranged to change the value of the currently selected parameter on the basis of a distance and direction of movement input via the second-type touch operation, step S8 may be arranged to change the value of the currently selected parameter on the basis of any suitable physical amount, other than the distance of movement, input via the second-type touch operation. For example, step S8 may be arranged to change the value of the currently selected parameter on the basis of a velocity of movement of the second-type touch operation or pressing force of the second-type touch operation. As another alternative, step S8 may be arranged to change the value of the currently selected parameter on the basis of a desired combination of a plurality of types of physical amounts, such as a distance, direction and velocity of movement and pressing force, input via the second-type touch operation.

Further, the number of tapping operation on the screen may be used as still another example of the physical amount to be input via the second-type touch operation. In such a case, step S8 of Fig. 5 may be arranged to change the value of the currently selected parameter on the basis of the number of tapping operation detected as the second-type touch operation.

Furthermore, as for parameter selection via the first-type touch operation and termination of the parameter selection, there may be employed a construction in which, in response to each user's touch operation on any one of the knob images 32, switching is made, in a toggle fashion, between a parameter-selected state and a parameter selection cancelled state. Namely, there may be employed a construction in which, when touch operation has been performed on any one of the knob images 32, that touch operation is detected as first-type touch operation and a state where the parameter represented by the knob image 32 is kept selected (i.e., parameter-selected state) is started, and in which the parameter-selected state is canceled when another touch operation has been performed subsequently on the same knob image 32. According to this modified construction, it is recognized that the first-type touch operation is currently continuing even when the user releases its finger or the like from the selected knob image 32 after the selection, via the first-type touch operation, of the parameter, and then the parameter-selected state is terminated when another touch operation on the same knob image 32 has been detected (i.e., when the user has touched the same selected knob image 32 with a finger or other contact means). This modified construction can be implemented even where the touch-panel display device 17 is of a type capable of recognizing only one point.

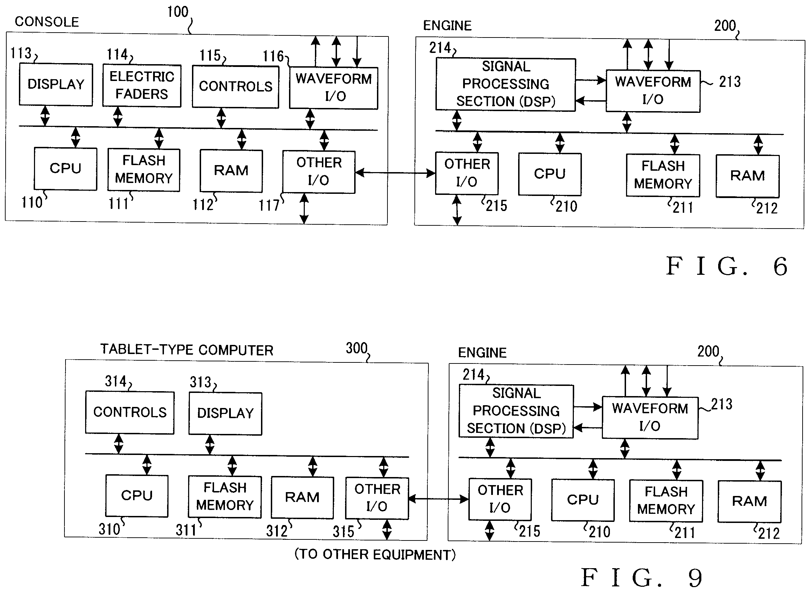

The application of the parameter adjustment apparatus of the present invention is not limited to the above-described digital audio mixer 1 as seen from the following description. With reference to Figs. 6 to 9, the following describe other embodiments of the present invention different from the embodiment of Fig. 1.

Fig. 6 is a block diagram showing an example general hardware setup of a mixing system which is constructed as another embodiment of the present invention, and which comprises a digital mixer console (hereinafter referred to simply as "console") 100 and a digital mixer engine (hereinafter referred to simply as "engine") 200. In Fig. 6, the console 100 comprises a CPU 110, a flash memory 111, a RAM 112, a waveform I/O 113, a touch-panel type display device 114, controls 115, electric faders 116, and an other interface 117. The engine 200 comprises a CPU 210, a flash memory 211, a RAM 212, a waveform I/O 213, a signal processing section (DSP section) 214, and an other I/O 215. The console 100 and the engine 200 are interconnected via the other I/Os 117 and 215 so that audio signals (waveform data) and control data (remote controlling data) can be communicated therebetween. In the mixing system of Fig. 6, the console 100 generates control data on the basis of user's operation and remote-controls the engine 200 on the basis of the generated control data. Namely, in the mixing system of Fig. 6, the audio signal processing of Fig. 2 is performed through cooperation among the DSP section 214, waveform I/O 213 and CPU 210 of the engine 200, the CPU 110 and waveform I/O 113 of the console 100, etc. Note that the remote control by the engine 200 is per se performed using a conventionally-known technique.

In Fig. 6, the console 100 functions as the parameter adjustment apparatus of the present invention. Namely, in this embodiment, the screen, parameter images 32, etc. shown in Figs. 3 and 4 are displayed on the touch-panel type display device 114 of the console 100. Further, the processing flowcharted in Fig. 5 is performed by the CPU 110 of the console 100.

Fig. 7 is a block diagram showing an example general hardware setup of a mixing system which is constructed as still another embodiment of the present invention, and which comprises a digital audio mixer 1 and a tablet-type computer 300. In Fig. 7, the tablet-type computer 300 is a portable, small computer provided with a touch-panel type display device 313 capable of recognizing or identifying multipoint contacts, which comprises a CPU 310, a flash memory 311, a RAM 312, the touch-panel type display device 313, controls 314 and an other I/O 315. The mixer 1 of Fig. 7 is constructed in a similar manner to the mixer 1 of Fig. 1. The computer 300 is connected with the mixer 1 via the other I/O 315 so that control data can be communicated therebetween. In Fig. 7, the computer 300 generates control data on the basis of user's operation and remote-controls the mixer 1 on the basis of the generated control data. The mixer 1 performs audio signal processing on the basis of the remote control performed by the computer 300. Namely, in the system of Fig. 7, the audio signal processing of Fig. 2 is performed through cooperation among the CPU 310 of the computer 300, the waveform I/O 113, DSP section 14 and CPU 10 of the mixer 1, etc.

In Fig. 7, the tablet-type computer 300 functions as the parameter adjustment apparatus of the present invention. Namely, in this embodiment, the screen, parameter images 32, etc. shown in Figs. 3 and 4 are displayed on the touch-panel type display device 313 of the tablet-type computer 300. Further, the processing flowcharted in Fig. 5 is performed by the CPU 310 of the tablet-type computer 300.

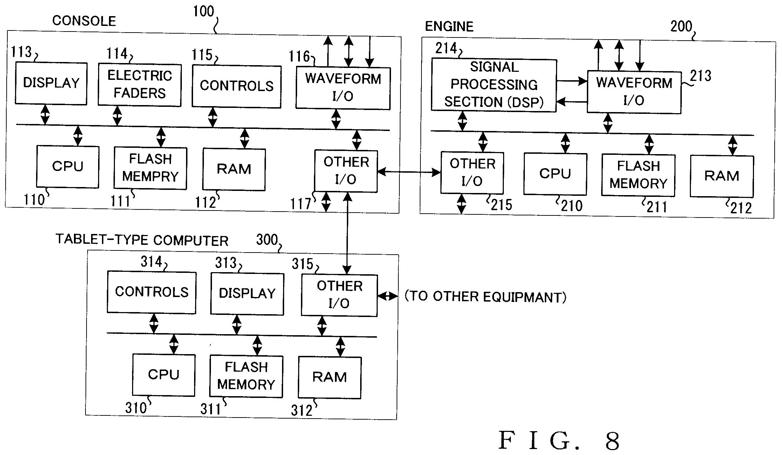

Fig. 8 is a block diagram showing an example general hardware setup of a mixing system which is constructed as still another embodiment of the present invention, and which comprises a console 100, an engine 200 and a tablet-type computer 300. The console 100 and the engine 200 in Fig. 8 are constructed in a similar manner to the console 100 and engine 200 in Fig. 6 and interconnected via the other I/Os 117 and 215 in such a manner that audio data and control data can be communicated therebetween. The tablet-type computer 300 of Fig. 8 is constructed in a similar manner to the tablet-type computer 300 of Fig. 7 and connected with the console 100 via the other I/O 315 in such a manner that control data can be communicated therebetween. The tablet-type computer 300 remote-controls audio signal processing, which is to be performed by the engine 200, via the console 100. Namely, the audio signal processing of Fig. 2 is performed through cooperation among the CPU 310 of the computer 300, the CPU 110 and waveform I/O 113 of the console 100 and the DSP section 214, waveform I/O 213 and CPU 210 of the engine 200, etc..

In the mixing system of Fig. 8 too, the tablet-type computer 300 functions as the parameter adjustment apparatus of the present invention. Namely, the screen, parameter images 32, etc. shown in Figs. 3 and 4 are displayed on the touch-panel type display device 313 of the tablet-type computer 300. Further, the processing flowcharted in Fig. 5 is performed by the CPU 310 of the tablet-type computer 300.

Fig. 9 is a block diagram showing an example general hardware setup of a mixing system which is constructed as still another embodiment of the present invention, and which comprises an engine 200 and a tablet-type computer 300. The engine 200 of Fig. 9 is constructed in a similar manner to the engine 200 of Fig. 6, and the tablet-type computer 300 of Fig. 9 is constructed in a similar manner to the tablet-type computer 300 of Fig. 7. The tablet-type computer 300 is connected with the engine 200 via the other I/O 315 in such a manner that control data can be communicated to the engine 200 via the other I/O 315 to remote-control audio signal processing to be controlled by the engine 200. Namely, in the mixing system of Fig. 9, the audio signal processing of Fig. 2 is performed through cooperation among the CPU 310 of the computer 300, the waveform I/O 13, DSP section 14 and CPU 10 of the engine 200, etc.

In the mixing system of Fig. 9 too, the tablet-type computer 300 functions as the parameter adjustment apparatus of the present invention. Namely, the screen, parameter images 32, etc. shown in Figs. 3 and 4 are displayed on the touch-panel type display device 313 of the tablet-type computer 300. Further, the processing flowcharted in Fig. 5 is performed by the CPU 310 of the tablet-type computer 300.

According to each of the systems of Figs. 6 to 9, the CPU 110 or 310 of the console 100 or tablet-type computer 300, functioning as the parameter adjustment apparatus of the present invention, operates as follows. Namely, when new touch operation on any one of the parameter images 32 has been detected while no touch operation is being performed on the touch-panel type display device 114 or 313, the CPU 110 or 310 can select the parameter represented by the touched parameter image 32 (steps S1, S2 and S4 of Fig. 5). When new touch operation has been detected while touch operation having selected a parameter is continuing, the CPU 110 or 310 can change the value (current data) of the currently selected parameter on the basis of a physical amount(s) input via the new touch operation (steps S1, S7 and S8 of Fig. 5). Thus, each of the embodiments shown in Figs. 6 to 9 can also selectively adjust only the value of the currently selected parameter in response to touch operation on the touch-panel type display device in a simplified and reliable manner, thereby achieving the superior advantageous benefit that the operability performing operation for adjusting the value of a particular parameter can be significantly enhanced.

## Claims

1. A parameter adjustment apparatus for adjusting values of a plurality of parameters, pertaining to audio signal processing, on the basis of touch operation on a touch-panel type display device (17) capable of identifying multipoint contacts, said parameter adjustment apparatus comprising:
a display control section (10) which displays, on the touch-panel type display device (17), a plurality of parameter images (32) for selecting respective parameters of said plurality of parameters;
a selection section (10, S2, S4, S5, S6) which, when start of a first touch operation on any one of the parameter images (32) has been detected while no touch operation is being performed on the touch-panel type display device (17), starts selection of the respective parameter represented by the parameter image touched by the first touch operation, and which, when termination of the first touch operation has been detected, terminates the selection of said respective parameter,
**characterized in that** the selection section (10, S1, S9) is further configured to keep said respective parameter selected until the first touch operation is terminated so that selection of any other parameter than said resepective parameter through another touch operation different from the first touch operation is made invalid, and **in that**
said parameter adjustment apparatus further comprises:
a change section (10, S1, S7, S8) which, when a second touch operation on the touch-panel type display device (17) has been detected while said first touch operation is continuing, changes a value of said respective parameter, currently selected by said selection section, on the basis of a physical amount input via the second touch operation.

2. The parameter adjustment apparatus as claimed in claim 1, wherein said display control section (10) displays the plurality of parameter images in a closely spaced arrangement on the touch-panel type display device (17).

3. The parameter adjustment apparatus as claimed in claim 1 or 2, wherein the parameter images (32) are images of virtual controls.

4. The parameter adjustment apparatus as claimed in any of claims 1-3, wherein said change section changes the value of said respective parameter on the basis of a distance and direction of movement input via the second touch operation.

5. A computer-readable storage medium containing a program for causing a computer to perform processing for adjusting values of a plurality of parameters, pertaining to audio signal processing, on the basis of touch operation on a touch-panel type display device (17) capable of identifying multipoint contacts, said program causing the computer to perform:
a display control process for displaying, on the touch-panel type display device (17), a plurality of parameter images (32) for selecting respective parameters of said plurality of parameters;
a selection process (S2, S4, S5, S6) for, when start of a first touch operation on any one of the parameter images has been detected while no touch operation is being performed on the touch-panel type display device, starting selection of the respective parameter represented by the parameter image touched by the first touch operation, and for, when termination of the first touch operation has been detected, terminating the selection of said respective parameter,
**characterized in that** the selection process (S1, S9) is further configured to keep said respective parameter selected until the first touch operation is terminated so that selection of any other parameter than said respective parameter through another touch operation different from the first touch operation is made invalid, and **in that**
said program further causes the computer to perform:
a change process (S1, S7, S8) for, when a second touch operation on the touch-panel type display device has been detected while the first touch operation is continuing, changing a value of said respective parameter, currently selected by said selection process, on the basis of a physical amount input via the second touch operation.

6. An audio mixing console for adjusting values of a plurality of parameters pertaining to audio signal processing, said audio mixing console comprising:
a touch-panel type display device (17) capable of identifying multipoint contacts;
a display control section (10) which displays, on the touch-panel type display device (17), a plurality of parameter images (32) for selecting respective parameters of said plurality of parameters;
a selection section (10, S2, S4, S5, S6) which, when start of a first touch operation on any one of the parameter images has been detected while no touch operation is being performed on the touch-panel type display device, starts selection of the respective parameter represented by the parameter image touched by the first touch operation, and which, when termination of the first touch operation has been detected, terminates the selection of the particular parameter,
**characterized in that** the selection section (10, S1, S9) is further configured to keep said respective parameter selected until the first touch operation is terminated so that selection of any other parameter than said selected parameter through another touch operation different from the first touch operation is made invalid, and **in that**
said audio mixing console further comprises:
a change section (10, S1, S7, S8) which, when a second touch operation on the touch-panel type display device has been detected while the first touch operation is continuing, changes a value of said respective parameter, currently selected by said selection section, on the basis of a physical amount input via the second touch operation.

7. The audio mixing console as claimed in claim 6, wherein said display control section displays the plurality of parameter images in a closely spaced arrangement on the touch-panel type display device.

8. The audio mixing console as claimed in claim 6 or 7, wherein the parameter images are images of virtual controls.

9. The audio mixing console as claimed in any of claims 6-8, wherein said change section changes the value of said respective parameter on the basis of a distance and direction of movement input via the second touch operation.

10. The audio mixing console as claimed in any of claims 6-9, which further comprises:
a knob-type physical control (15, 33) to which a parameter is allocatable; and
an allocation section (10, S3) which, when the start of the first touch operation on the parameter image has been detected while no touch operation is being performed on the touch-panel type display device, allocates said respective parameter, represented by the parameter image touched by the first touch operation, to the knob-type physical control.

## Patentansprüche

1. Parametereinstellvorrichtung zum Einstellen von Werten mehrerer Parameter, die sich auf eine Audiosignalverarbeitung beziehen, auf Basis einer Berührungsbetätigung auf einer Touchscreen-Anzeigevorrichtung (17), die dazu fähig ist, Mehrpunktkontakte zu erkennen, wobei die Parametereinstellvorrichtung aufweist:
einen Anzeigesteuerungsabschnitt (10), der auf der Touchscreen-Anzeigevorrichtung (17) mehrere Parameterbilder (32) zum Auswählen entsprechender Parameter der mehreren Parameter anzeigt;
einen Auswahlabschnitt (10, S2, S4, S5, S6), der, wenn ein Beginn einer ersten Berührungsbetätigung an einem der Parameterbilder (32) erfasst wurde, während keine Berührungsbetätigung an der Touchscreen-Anzeigevorrichtung (17) durchgeführt wird, eine Auswahl des entsprechenden Parameters beginnt, der von dem Parameterbild repräsentiert wird, das von der ersten Berührungsbetätigung berührt wird, und der, wenn eine Beendigung der ersten Berührungsbetätigung erfasst wurde, die Auswahl des entsprechenden Parameters beendet,
**dadurch gekennzeichnet, dass** der Auswahlabschnitt (10, S1, S9) ferner dazu konfiguriert ist, den entsprechenden Parameter ausgewählt zu behalten, bis die erste Berührungsbetätigung beendet ist, sodass eine Auswahl eines anderen Parameters als des entsprechenden Parameters durch eine andere Berührungsbetätigung, die sich von der ersten Berührungsbetätigung unterscheidet, ungültig gemacht wird, und dass
die Parametereinstellvorrichtung ferner aufweist:
einen Änderungsabschnitt (10, S1, S7, S8), der, wenn eine zweite Berührungsbetätigung auf der Touchscreen-Anzeigevorrichtung (17) erfasst wurde, während die erste Berührungsbetätigung andauert, einen Wert des entsprechenden Parameters, der aktuell von dem Auswahlabschnitt ausgewählt ist, auf Basis einer physikalischen Größe ändert, die über die zweite Berührungsbetätigung eingegeben wird.

2. Parametereinstellvorrichtung gemäß Anspruch 1, wobei der Anzeigesteuerungsabschnitt (10) die mehreren Parameterbilder in einer eng beieinanderliegenden Anordnung auf der Touchscreen-Anzeigevorrichtung (17) anzeigt.

3. Parametereinstellvorrichtung gemäß Anspruch 1 oder 2, wobei die Parameterbilder (32) Bilder virtueller Bedienelemente sind.

4. Parametereinstellvorrichtung gemäß einem der Ansprüche 1 bis 3, wobei der Änderungsabschnitt den Wert des entsprechenden Parameters auf Basis eines Abstands und einer Richtung einer Bewegung ändert, die über die zweite Berührungsbetätigung eingegeben wird.

5. Computerlesbares Speichermedium, das ein Programm enthält, das einen Computer dazu veranlasst, eine Verarbeitung zum Einstellen von Werten mehrerer Parameter, die sich auf eine Audiosignalverarbeitung beziehen, auf Basis einer Berührungsbetätigung auf einer Touchscreen-Anzeigevorrichtung (17) durchzuführen, die dazu fähig ist, Mehrpunktkontakte zu erkennen, wobei das Programm den Computer dazu veranlasst, Folgendes auszuführen:
einen Anzeigesteuerungsprozess zum Anzeigen mehrerer Parameterbilder (32) zum Auswählen entsprechender Parameter der mehreren Parameter auf der Touchscreen-Anzeigevorrichtung (17);
einen Auswahlprozess (S2, S4, S5, S6) zum Beginnen einer Auswahl des entsprechenden Parameters, der von dem Parameterbild repräsentiert wird, das von der ersten Berührungsbetätigung berührt wird, wenn ein Beginn einer ersten Berührungsbetätigung an einem der Parameterbilder (32) erfasst wurde, während keine Berührungsbetätigung an der Touchscreen-Anzeigevorrichtung durchgeführt wird, und zum Beenden der Auswahl des entsprechenden Parameters, wenn eine Beendigung der ersten Berührungsbetätigung erfasst wurde,
**dadurch gekennzeichnet, dass** der Auswahlprozess (S1, S9) ferner dazu konfiguriert ist, den entsprechenden Parameter ausgewählt zu behalten, bis die erste Berührungsbetätigung beendet ist, sodass eine Auswahl eines anderen Parameters als des entsprechenden Parameters durch eine andere Berührungsbetätigung, die sich von der ersten Berührungsbetätigung unterscheidet, ungültig gemacht wird, und dass
das Programm ferner der Computer veranlasst, Folgendes auszuführen:
einen Änderungsprozess (S1, S7, S8) zum, wenn eine zweite Berührungsbetätigung auf der Touchscreen-Anzeigevorrichtung erfasst wurde, während die erste Berührungsbetätigung andauert, Ändern eines Werts des entsprechenden Parameters, der aktuell von dem Auswahlabschnitt ausgewählt ist, auf Basis einer physikalischen Größe, die über die zweite Berührungsbetätigung eingegeben wird.

6. Audiomischkonsole zum Einstellen von Werten mehrerer Parameter, die sich auf eine Audioverarbeitung beziehen, wobei die Audiomischkonsole aufweist:
eine Touchscreen-Anzeigevorrichtung (17), die zum Erkennen von Mehrpunktkontakten fähig ist;
einen Anzeigesteuerungsabschnitt (10), der auf der Touchscreen-Anzeigevorrichtung (17) mehrere Parameterbilder (32) zum Auswählen entsprechender Parameter der mehreren Parameter anzeigt;
einen Auswahlabschnitt (10, S2, S4, S5, S6), der, wenn ein Beginn einer ersten Berührungsbetätigung an einem der Parameterbilder erfasst wurde, während keine Berührungsbetätigung an der Touchscreen-Anzeigevorrichtung durchgeführt wird, eine Auswahl des entsprechenden Parameters beginnt, der von dem Parameterbild repräsentiert wird, das von der ersten Berührungsbetätigung berührt wird, und der, wenn eine Beendigung der ersten Berührungsbetätigung erfasst wurde, die Auswahl des entsprechenden Parameters beendet,
**dadurch gekennzeichnet, dass** der Auswahlabschnitt (10, S1, S9) ferner dazu konfiguriert ist, den entsprechenden Parameter ausgewählt zu behalten, bis die erste Berührungsbetätigung beendet ist, sodass eine Auswahl eines anderen Parameters als des entsprechenden Parameters durch eine andere Berührungsbetätigung, die sich von der ersten Berührungsbetätigung unterscheidet, ungültig gemacht wird, und dass
die Audiomischkonsole ferner aufweist:
einen Änderungsabschnitt (10, S1, S7, S8), der, wenn eine zweite Berührungsbetätigung auf der Touchscreen-Anzeigevorrichtung erfasst wurde, während die erste Berührungsbetätigung andauert, einen Wert des entsprechenden Parameters, der aktuell von dem Auswahlabschnitt ausgewählt ist, auf Basis einer physikalischen Größe ändert, die über die zweite Berührungsbetätigung eingegeben wird.

7. Audiomischkonsole gemäß Anspruch 6, wobei der Anzeigesteuerungsabschnitt die mehreren Parameterbilder in einer eng beieinanderliegenden Anordnung auf der Touchscreen-Anzeigevorrichtung anzeigt.

8. Audiomischkonsole gemäß Anspruch 6 oder 7, wobei die Parameterbilder Bilder virtueller Bedienelemente sind.

9. Audiomischkonsole gemäß einem der Ansprüche 6 bis 8, wobei der Änderungsabschnitt den Wert des entsprechenden Parameters auf Basis eines Abstands und einer Richtung einer Bewegung ändert, die über die zweite Berührungsbetätigung eingegeben wird.

10. Audiomischkonsole gemäß einem der Ansprüche 6 bis 9, die ferner aufweist:
ein knopfartiges physisches Bedienelement (15, 33), dem ein Parameter zuweisbar ist; und
einen Zuweisungsabschnitt (10, S3), der, wenn ein Beginn einer ersten Berührungsbetätigung an dem Parameterbild erfasst wurde, während keine Berührungsbetätigung an der Touchscreen-Anzeigevorrichtung durchgeführt wird, den entsprechenden Parameter, der von dem Parameterbild repräsentiert wird, das von der ersten Berührungsbetätigung berührt wird, dem knopfartigen Bedienelement zuweist.

## Revendications

1. Appareil de réglage de paramètre destiné à régler des valeurs d'une pluralité de paramètres, se rapportant à un traitement de signal audio, sur la base d'une opération de toucher sur un dispositif d'affichage de type panneau tactile (17) capable d'identifier des contacts multipoints, ledit appareil de réglage de paramètre comprenant :
une section de commande d'affichage (10) qui affiche, sur le dispositif d'affichage de type panneau tactile (17), une pluralité d'images de paramètre (32) pour sélectionner des paramètres respectifs de ladite pluralité de paramètres ;
une section de sélection (10, S2, S4, S5, S6) qui, lorsque le début d'une première opération de toucher sur l'une quelconque des images de paramètre (32) a été détecté alors qu'aucune opération de toucher n'est réalisée sur le dispositif d'affichage de type panneau tactile (17), démarre une sélection du paramètre respectif représenté par l'image de paramètre touchée par la première opération de toucher, et qui, lorsque la fin de la première opération de toucher a été détectée, met fin à la sélection dudit paramètre respectif,
**caractérisé en ce que** la section de sélection (10, S1, S9) est en outre configurée pour garder ledit paramètre respectif sélectionné jusqu'à ce que la première opération de toucher soit finie pour qu'une sélection de tout autre paramètre que ledit paramètre respectif par l'intermédiaire d'une autre opération de toucher différente de la première opération de toucher soit rendue invalide, et **en ce que**
ledit appareil de réglage de paramètre comprend en outre :
une section de changement (10, S1, S7, S8) qui, lorsqu'une seconde opération de toucher sur le dispositif d'affichage de type panneau tactile (17) a été détectée pendant que ladite première opération de toucher se poursuit, change une valeur dudit paramètre respectif, actuellement sélectionné par ladite section de sélection, sur la base d'une quantité physique entrée par le biais de la seconde opération de toucher.

2. Appareil de réglage de paramètre selon la revendication 1, dans lequel ladite section de commande d'affichage (10) affiche la pluralité d'images de paramètre dans un agencement serré sur le dispositif d'affichage de type panneau tactile (17).

3. Appareil de réglage de paramètre selon la revendication 1 ou 2, dans lequel les images de paramètre (32) sont des images de commandes virtuelles.

4. Appareil de réglage de paramètre selon l'une quelconque des revendications 1 à 3, dans lequel ladite section de changement change la valeur dudit paramètre respectif sur la base d'une distance et d'une direction de mouvement entrées par le biais de la seconde opération de toucher.

5. Support de stockage lisible par ordinateur contenant un programme destiné à amener un ordinateur à réaliser un traitement pour régler des valeurs d'une pluralité de paramètres, se rapportant à un traitement de signal audio, sur la base d'une opération de toucher sur un dispositif d'affichage de type panneau tactile (17) capable d'identifier des contacts multipoints, ledit programme amenant l'ordinateur à réaliser :
un processus de commande d'image destiné à afficher, sur le dispositif d'affichage de type panneau tactile (17), une pluralité d'images de paramètre (32) pour sélectionner des paramètres respectifs de ladite pluralité de paramètres ;
un processus de sélection (S2, S4, S5, S6) pour, lorsque le début d'une première opération de toucher sur l'une quelconque des images de paramètre a été détecté alors qu'aucune opération de toucher n'est réalisée sur le dispositif d'affichage de type panneau tactile, démarrer une sélection du paramètre respectif représenté par l'image de paramètre touchée par la première opération de toucher, et pour, lorsque la fin de la première opération de toucher a été détectée, mettre fin à la sélection dudit paramètre respectif,
**caractérisé en ce que** le processus de sélection (S1, S9) est en outre configuré pour garder ledit paramètre respectif sélectionné jusqu'à ce que la première opération de toucher soit finie pour qu'une sélection de tout autre paramètre que ledit paramètre respectif par l'intermédiaire d'une autre opération de toucher différente de la première opération de toucher soit rendue invalide, et **en ce que**
ledit programme amène en outre l'ordinateur à réaliser :
un processus de changement (S1, S7, S8) destiné, lorsqu'une seconde opération de toucher sur le dispositif d'affichage de type panneau tactile a été détectée pendant que la première opération de toucher se poursuit, à changer une valeur dudit paramètre respectif, actuellement sélectionné par ledit processus de sélection, sur la base d'une quantité physique entrée par le biais de la seconde opération de toucher.

6. Console de mélange audio destinée à régler des valeurs d'une pluralité de paramètres se rapportant à un traitement de signal audio, ladite console de mélange audio comprenant :
un dispositif d'affichage de type panneau tactile (17) capable d'identifier des contacts multipoints ;
une section de commande d'affichage (10) qui affiche, sur le dispositif d'affichage de type panneau tactile (17), une pluralité d'images de paramètre (32) pour sélectionner des paramètres respectifs de ladite pluralité de paramètres ;
une section de sélection (10, S2, S4, S5, S6) qui, lorsque le début d'une première opération de toucher sur l'une quelconque des images de paramètre a été détectée alors qu'aucune opération de toucher n'est réalisée sur le dispositif d'affichage de type panneau tactile, démarre une sélection du paramètre respectif représenté par l'image de paramètre touchée par la première opération de toucher, et qui, lorsque la fin de la première opération de toucher a été détectée, met fin à la sélection du paramètre particulier,
**caractérisée en ce que** la section de sélection (10, S1, S9) est en outre configurée pour garder ledit paramètre respectif sélectionné jusqu'à ce que la première opération de toucher soit finie pour qu'une sélection de tout autre paramètre que ledit paramètre respectif par l'intermédiaire d'une autre opération de toucher différente de la première opération de toucher soit rendue invalide, et **en ce que**
ladite console de mélange audio comprend en outre :
une section de changement (10, S1, S7, S8) qui, lorsqu'une seconde opération de toucher sur le dispositif d'affichage de type panneau tactile a été détectée pendant que la première opération de toucher se poursuit, change une valeur dudit paramètre respectif, actuellement sélectionné par ladite section de sélection, sur la base d'une quantité physique entrée par le biais de la seconde opération de toucher.

7. Console de mélange audio selon la revendication 6, dans laquelle ladite section de commande d'affichage affiche la pluralité d'images de paramètre dans un agencement serré sur le dispositif d'affichage de type panneau tactile.

8. Console de mélange audio selon la revendication 6 ou 7, dans laquelle les images de paramètre sont des images de commandes virtuelles.

9. Console de mélange audio selon l'une quelconque des revendications 6 à 8, dans laquelle ladite section de changement change la valeur dudit paramètre respectif sur la base d'une distance et d'une direction de mouvement entrées par le biais de la seconde opération de toucher.

10. Console de mélange audio selon l'une quelconque des revendications 6 à 9, qui comprend en outre :
une commande physique de type molette (15, 33) à laquelle un paramètre peut être alloué ; et
une section d'allocation (10, S3) qui, lorsque le début de la première opération de toucher sur l'image de paramètre a été détecté alors qu'aucune opération de toucher n'est réalisée sur le dispositif d'affichage de type panneau tactile, alloue ledit paramètre respectif, représenté par l'image de paramètre touchée par la première opération de toucher, à la commande physique de type molette.
